# EUROPEAN PATENT SPECIFICATION

(11) **EP 2 574 562 B1**
(45) Date of publication and mention of the grant of the patent: **06.09.2017**
(21) Application number: 12186660.2
(22) Date of filing: 28.09.2012
(51) Int. Cl.: B65D 1/02, B29C 49/48

(54) **Container for storing fluid products and method of manufacturing such a container**
Behälter zum Aufbewahren flüssiger Produkte und Verfahren zur Herstellung solch eines Behälters
Conteneur pour le stockage de produits liquides et procédé de fabrication d'un tel récipient

(30) Priority: 29.09.2011 NL 2007497
(43) Date of publication of application: 03.04.2013
(73) Proprietor: Dethapak B.V., 7631 CB Ootmarsum (NL)
(72) Inventor: Dethmers, Jan Hessel, 7609 BM Almelo (NL); Albers, Hendrikus Johannes Theodorus, 7825 VG Emmen (NL)
(74) Representative: V.O.

(56) References cited:
- EP-A1- 2 298 654
- WO-A2-98/38094
- US-A- 4 925 063
- US-A1- 2005 003 123

## Description

### FIELD AND BACKGROUND OF THE INVENTION

The invention relates to a container for storing fluid products, which is blow molded from an injection molded preform of a Polyethylenterephthalat (PET) polymer. Furthermore, the invention relates to a method of manufacturing such a container.

Containers for storing fluid products typically have a neck via which the containers is filled and via which the fluid may be dispensed from the container. Typical examples are bottles, jerry cans and casks of various types. To facilitate pouring fluid out of the container in a controlled manner some containers have, in addition to the neck, a dispenser spout with a spout closure for closing off the dispenser, for example water jugs, teapots and watering cans.

Such containers with an additional pouring spout are also known in the field of blow molded liquid containers which are mass produced efficiently for use as packaging for fluid products. A challenge is then to provide a tread or other application means for the closure or the dispenser of the spout. However, in blow molding from an extruded tube of material this problem is not insurmountable. Such containers are made of polyethylene (PE) or polypropylene (PP). However, damage to such PE or PP containers regularly occurs and entails substantial consequential further damage, because leaked liquid often soils other stored products.

Manufacturing such containers by stretch blow molding from a preform of a PET polymer, which may be a PET homolpolymer or a copolymer, such as a copolymer of PET and isophthalic acid or a copolymer of PET, isophthalic acid and a glycol complex (PETG), could at least reduce the occurrence of leaks, since PET containers stretch blow molded from an injection molded perform are typically stronger than containers blow molded from a tube of polyolefin material.

Much of the commercial success of PET lies in the fact that it crystallizes at large strains during warm deformation processing. The imparted crystallinity increases its stiffness and strength, improves its dimensional stability, and increases its density. (Dupaix, Rebecca B.; Temperature and rate dependent finite strain behavior of poly(ethylene terephthalate) and poly(ethylene terephthalate)-glycol above the glass transition temperature; Thesis (Ph. D.)--Massachusetts Institute of Technology, Dept. of Mechanical Engineering, 2003.

PET containers can for instance resist pressures that can be exerted by carbonated beverages. For a reliable anchoring of the closure of the neck of such containers, it is advantageous that the container bodies have a neck portion that is pre-molded to a predetermined shape (the "finish") as the preform is injection molded, which shape, with a typically a larger wall thickness than the thickness of the portion of the container wall deformed during blowing, is essentially maintained during blow molding.

WO 98/38094 discloses a container and a method of making a container in the form of a spray bottle. PET is mentioned as one of a number of plastic materials of which such a bottle can be manufactured. It is suggested to blow mold the bottle from a preform thereby forming for example a threaded neck portion at the additional spout as well. However, when blow molding containers from PET material, the wall material of the container body is typically stretched beyond the natural stretch ratio of the polymer to achieve strain hardening, preferably before the PET material contacts the inner surface of the mould. Therefore, it is impracticable to form raised edges or flanges, such as a screw thread to which a closure could be anchored, at a distal end of a spout projecting from the container body. Formation of such shapes would require further deformation beyond the limits imposed by the strain hardening caused by the initial deformation during blow moulding of the PET material. Another examples of a container is disclosed in US4925063.

### SUMMARY OF THE INVENTION

It is an object of the present invention to provide a container for storing fluid products, which is blow molded from an injection molded preform of PET or a similar thermoplastic polymer resin with a dispensing spout in addition to the neck, which is closed off by a closure, but allows the container body to have been expanded to a large degree over its entire circumference.

These and other objects can be achieved by a container according to claim 1. The invention can also be embodied in a method according to claim 12 for manufacturing such a container.

Because the spout closure is adhesively attached to the spout, the spout does not have to be formed with raised edges, flanges or other projections or recesses for anchoring the closure, so the spout can have a smooth shape which allows obtaining a relatively long and/or slender spout with relatively little additional deformation of the wall material. Accordingly, such a spout can also be formed integrally during blow molding of a container body preforms of which the wall material is stretched during blow molding to quite close to its maximum deformability. The invention is based on the insight that because PET adheres effectively to adhesives (this in contrast to PE and PP that are more deformable), it is sufficient to form a bulge without anchoring recesses or projections and instead an adhesive can be used to fix the closure to the spout. The bulge portion is provided with a dispenser passage, establishing a fluid connection between the inner space of the container and its outer space, after the molding process.

A neck passage may be bounded by and extend through the injection molded neck, the container further comprising a neck closure for closing off the neck passage. The neck closure may be of the same type as the spout closure mentioned before or be of a different type for instance not adapted for dispensing or for opening and reclosing.

Preferably, the closure seals off the bulge portion in a leak-tight manner. The leak tight sealing may be achieved by a tight fit of the closure and/or the provision of a sealing layer between closure and the bulge portion. The leak tight seal between the closure and the bulge portion is preferably provided by the adhesive constituting a ring surrounding the spout passage between the bulge portion and the closure. Thus, no additional sealing member is required and relatively wide tolerances on dimensions and shape of the distal end of the bulge portion can be accepted without significant effect on the reliability of the sealing. In turn, this allows the opening in the bulge portion to be made in a simple and quick manner with little or no finishing operation.

In a preferred embodiment, the spout closure comprises a fitting attached to the bulge portion by the adhesive and a cap member releasably attached to the fitting. Preferably the cap member is reclosable. The fitting may constitute or comprise an extension of the spout and/or be shaped to facilitate controlled pouring in a dosed manner and without drips running down the container after pouring. The fitting, the cap member or the closure may also be or comprise other parts or portions, for example, a spray nozzle, a valve or a pump. Thus, solutions for functionalities and user-friendliness as known as such for other closures may be integrated in the closure of the spout.

In a preferred embodiment, the fitting comprises a threaded portion for engaging a threaded portion of the cap member, so that a reclosable cap member can easily be removed from and reapplied to the fitting. Snap-on elements, ratchet elements and other additional elements such a non-tampering seals may also be provided.

In a preferred embodiment, the bulge portion has a substantially constant wall thickness, so that it can be formed with a relatively uniformly distributed deformation and little additional deformation over the deformation to which adjacent portions of the container body are subjected during blow-molding. Since the distal end of the bulge portion is adhesively attached to the closure, no additional wall thickness at the distal end is required for providing a reliable anchoring of the closure. Also, if a reclosable cap member is used, the fitting can provide additional stability for ensuring a reliably sealed fit of the cap member in closed condition.

A particularly high resistance against deformation and damage at a given wall thickness is achieved if at least a substantial portion of the expanded wall material of the container body is strain hardened. Where the strain hardened portion includes the bulge portion and adjacent portions of the wall material, the further deformability of the wall material is particularly restricted, which puts constraints on the extent to which the bulge portion can be shaped as desired.

For blow molding the bulge portion with a relatively uniformly distributed deformation and relatively little additional deformation over the deformation of adjacent portions of the container body, it is furthermore advantageous if the bulge portion has an outer shape that is continuously free of projections projecting orthogonally to its central axis. The use of an adhesive allows fixing a closure to a bulge portion of such a shape. A further reduction of the additional deformation required can be achieved by providing that the bulge portion has an outer cross-sectional shape that is continuously tapered from the adjacent container wall portion to the distal end to a smallest outer contour at the distal end.

The adhesive is preferably a gap-filling adhesive and especially a hot-melt glue. By the use of such an adhesive, a reliable attachment of the closure to the bulge portion is obtained even if a substantial gap is present between the bulge portion and the closure or closure member to be glued thereto.

As mentioned before, the present application does not only refer to containers as described in the before passages but also to a method of manufacturing such a container.

Because the closure is anchored to the bulge portion by an adhesive, the bulge portion need not be blow molded to a shape arranged for form-locked engagement to the closure, so the bulge portion can be formed with a relatively uniform deformation and with relatively little additional deformation, which in turn allows the use of PET material, which has a limited deformability, but adheres to glue very well and has a high strength, stiffness and impact resistance.

The spout dispenser passage is preferably cut by piercing a star shaped cut in a distal end of the bulge portion with a cutter and bending over flaps of wall material between the cuts or by piercing a distal end of the bulge portion with a hot cutter causing wall material in contact with the cutter to melt or retract from an area where the passage is formed. In both methods, the formation of loose parts of wall material, that would have to be removed, is avoided.

In the following, the present invention is explained with reference to preferred embodiments which are illustrated by the enclosed drawings.

### BRIEF DESCRIPTION OF THE DRAWINGS

- Fig. 1: a cross-sectional view of a first example of a container according to the invention;
- Fig. 2: a cross-sectional view of an example of a preform for blow molding a container body of a container as shown in Fig. 1;
- Figs. 3 and 4: cross-sectional views of two stages of blow-molding a body of a container as shown in Fig. 1 in a mold;
- Fig. 5: a cross-sectional view of a body of a container as shown in Fig. 1 after completion of the blow molding process;
- Fig. 6: a cross-sectional view of a detail of the container body shown in Fig. 5;
- Fig. 7: the detail of Fig. 6 with an example of a closure attached thereto; and
- Fig. 8: the detail of Fig. 6 with another example of a closure attached thereto constituting an enlarged representation of a portion VIII of Fig. 1.

### DETAILED DESCRIPTION

In the following, corresponding parts in different examples are designated by mutually identical reference numerals, wherein occasionally superscript reference signs are utilised to mutually distinguish corresponding parts.

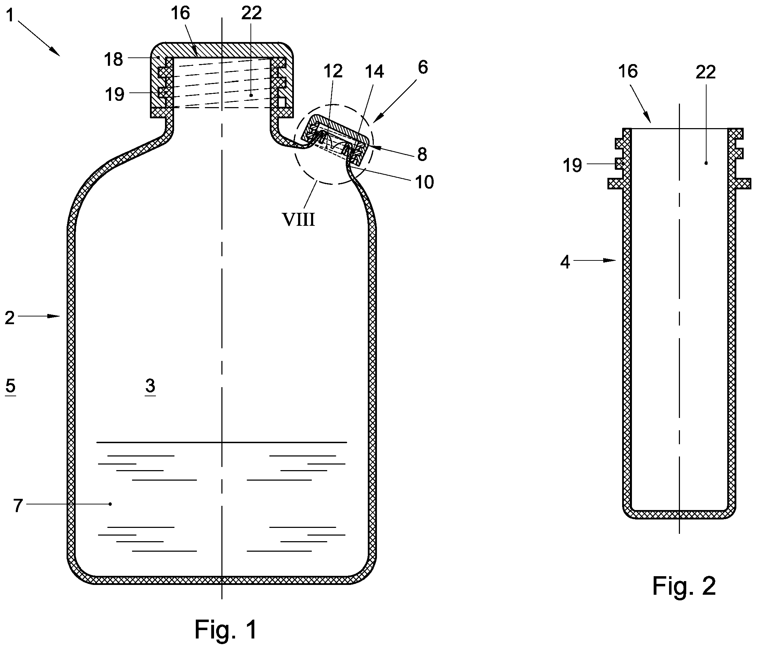

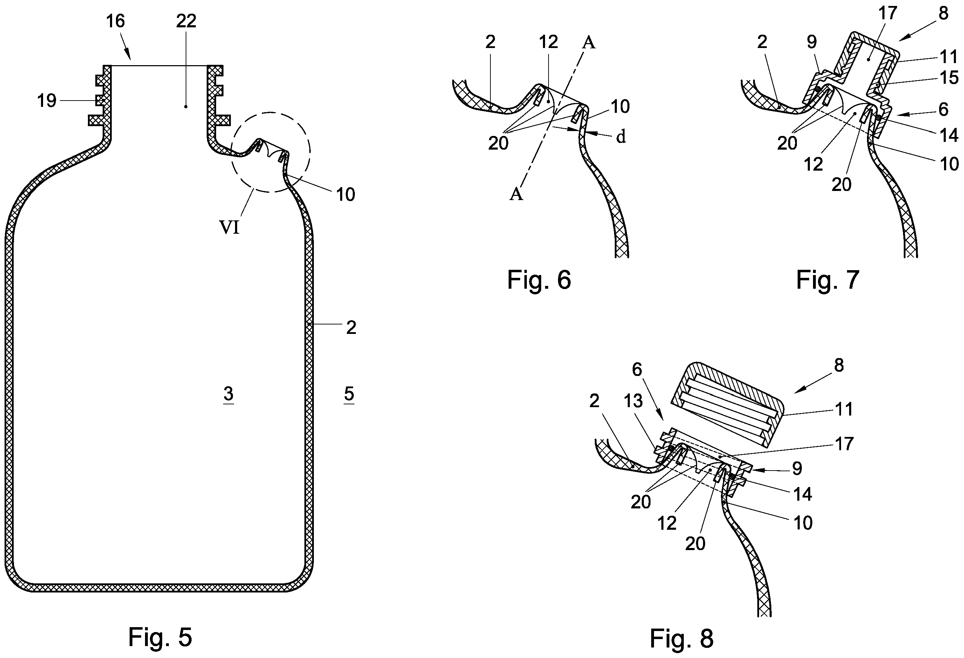

Figs. 1 and 8 shows an example of a container according to the invention which has been blow molded from a preform of PET material as shown in Fig. 2. The container 1 is composed of a container body 2 with a spout 6 and a neck 16. In this example, the spout 6 is primarily adapted for dispensing and the neck 16 primarily arranged for use as a sealable filling conduit for introducing a fluid product such as a liquid or a paste or a gel 7 to the inner space 3 bounded by the container 1. However, it is in principle also possible to supply the fluid 7 via the spout 6 and to dispense it via the neck 16 or to provide for dispensing via the spout 6 or the neck 16 depending on for example the flow rate at which the fluid is to be dispensed. A particular advantage of the neck 16 and the spout 6 - both constituting conduits for establishing open communication between the outer space of the container and its inner space - is that during pouring via one of the two, the other can serve as a passage for aerating the inner space 3 so that disturbance of the outflow of fluid by a vacuum formed inside the container 1 can be avoided.

The neck 16 is provided with a neck closure 18 in the form of a cap with an internal thread. The neck cap 18 closes off a neck dispenser passage 22 that allows fluids to pass from the inner space 3 to the outer space 5 of the container 1 and vice versa. The neck cap 18 has been injection molded to a co-operate with an injection molded neck portion 19 of the preform 4 (see also Fig. 2) used for blow molding the container body 2 as described in the following in detail. The injection molded neck portion 19 of the preform 4 essentially maintains its shape during blow molding. In this example, the molded portion 19 is formed as an outer thread arranged for co-operation with the inner thread of the neck cap 18, so that the neck cap 18 can be screwed onto the injection molded neck portion 19 of the container body 2.

The spout 6 is provided with a spout closure 8 which closes-off a spout dispenser passage 12 in the container body 2. The spout closure is composed of a fitting 9 and a spout cap 11. As is best seen in Fig. 8, the fitting 9 is attached to the bulge portion 10 by an adhesive 14. The fitting 9 also constitutes a dispenser bounding a passage 17 via which the fluid 7 can be poured out of the inner space 3 of the container body 2.

The fitting 9 further has a threaded outer circumference 13 arranged for engaging an inner thread of the spout cap 11, so that the spout cap can be releasably attached to the fitting. The spout cap may also be in another form and be arranged for operation as a spraying nozzle, a tube connector etc.

As shown, the spout closure 8 is attached to a bulge portion 10 at the container body 2 by the use of an adhesive 14.

Fig. 2 shows a cross-section of a preform 4 used for blow molding the container body 2 (see Fig. 1). The preform 4 has been injection molded in a previous manufacturing process wherein the neck portion 19 of the container body 2 including threads (the "finish") has been integrally formed with the rest of the preform 4. The neck portion 19 is used for holding the preform 4 in a mold 30 during blow molding of the container body 2.

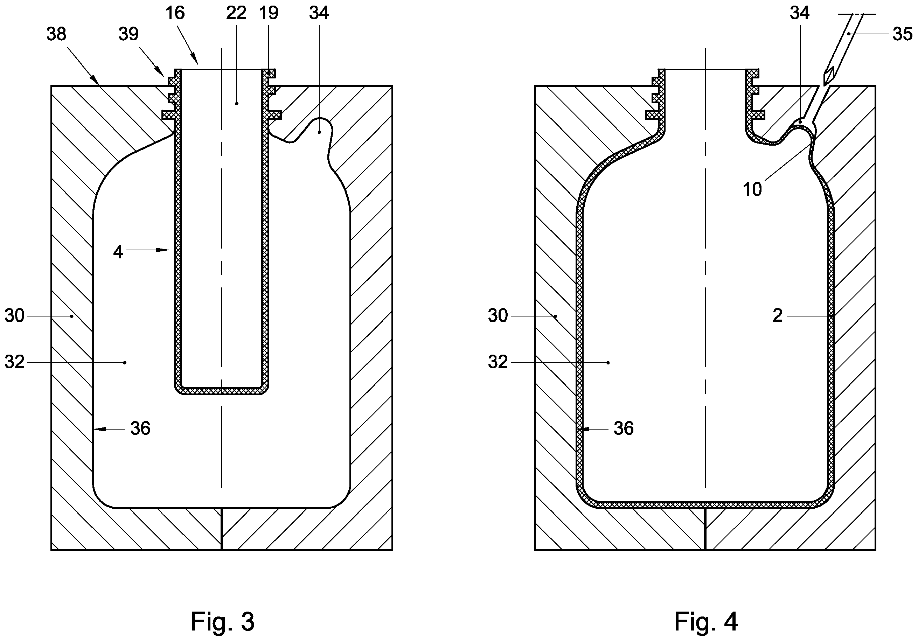

Figs. 3 and 4 illustrate two successive stages of the blow molding process. A mold 30 bounds a container body cavity 32. In Fig. 3 the preform 4 is partially positioned inside the mold cavity 32 and has a neck portion 19 engaged by passage 39 of the mold, shaped for form locked engagement with the neck portion 19 of the perform 4.

Next, in a stretch blow molding process, the preform 4 is heated (for instance by infrared heaters - not shown) above its glass transition temperature. Then, high pressure air is blown into the preform 4, which causes the portion of the preform 4 inside the mold cavity 32 that is spaced from the inner surface 36 of the mold to be expanded until it contacts the inner surface 36 of the mold (see Fig. 4). During the expansion, the PET material is bi-axially stretched beyond the natural stretch ratio of the polymer (for instance 10 - 12 for a Co-PET, at blowing temperature of 95 °C) and thereby strain hardened, preferably before contacting the inner surface of the mould, due to crystallization and orientation of the polymer material. The preform 4 may initially be stretched with a core rod (not shown) to achieve initial elongation in axial direction. The blow mold cavity 32 has a recess 34 for forming a bulge portion 10 projecting from an adjacent portion of the container body 2. At the recess 34, the wall material of the preform 4 is not restrained by the inner surface 36 of the mold 30 for controlling deformation up to a predetermined shape corresponding to the shape of the mold cavity 32.

In the present example, the bulge portion recess 34 is so deep that the material bulging out therein is not restrained but stretched to its maximum deformation (limited by the strain hardening effect at the applied air pressure and temperature) without reaching at least the most distal portion of the inner surface of the bulge portion recess 34. Thus, a bulge portion 10 projecting as far as possible at the given process parameters is obtained. However, the shape and dimensions of the bulge portion recess 34 may also be such that, taking into account the temperature to which the material is heated, the applied pressure, the wall thickness and the deformation of the preform to the inner surface 36 of the cavity 32, the material is deformed fully into the bulge portion recess, until its distal end.

As is best seen in Figs. 5 and 6, the bulge portion 10 obtained has a shape without projections in a direction perpendicular to a central axis A in the direction in which the bulge portion 10 projects. Also, the bulge portion tapers gradually and continuously from its proximal end to its distal end. Thus a bulge projecting over a maximum distance is obtained within the constraints determined by the maximum specific plastic deformation of the material obtainable during blow molding at the given processing conditions. In this example, the bulge portion 10 is formed as a rounded cone with a central axis A, without any protrusions projecting orthogonally to the axis A. Since the material in the area of the bulge portion 10 is generally deformed to its maximum deformation at the given processing conditions, the wall thickness of the container body 2 in the area of the bulge portion 10 is substantially constant. Also, due to the constraints determined by the maximum specific plastic deformation of the material obtainable during blow molding, the formation of projections and recesses and or stiffening profiles during blow molding is impracticable.

After the preform 4 has been expanded to a shape as shown in Fig. 4, the material, which has preferably been expanded to such an extent that strain hardening has occurred, is allowed to cool to below the glass transition temperature, so that the material maintains essentially its expanded shape when the molding pressure is removed.

After the container body has been expanded, an opening in the bulge portion is made in the distal end of the bulge portion 10. In the present example, this opening is made by axially pushing a cutter 35 into the container body, the cutter 35 being formed for cutting slits intersecting or meeting at the central axis A of the bulge portion and pushing flaps 20 obtained thereby inwardly into the container body 2. To obtain flaps that can be bent inwardly so as to obtain a pouring passage, for instance at least two intersecting slits or at least three slits meeting a common point can be made. To obtain flaps of equal length, the intersection or meeting point is preferably at the central axis A. Since the hole is made by cutting out flaps 20 and bending over the flaps 20, no material is cut loose that needs to be removed or could inadvertently end up in the inner space 3 of the container body 2.

The cutter 35 may also be a hot pin that causes PET material in contact therewith to melt or at least shrink back from its stretched condition, so that the contacted PET retracts from the location where the opening in the bulge portion 10 is to be made. The need of bending over flaps is then avoided and the melted material forms a rim of increased thickness around the passage formed, which adds to stiffness of the bulge portion 10. The piercing of the bulge portion to form the spout dispenser passage in the container body may also be carried out after the blow moulded container body has been removed from the blow moulding mould.

Figs. 5 and 6 show a container body 2 that has been blow molded in a mold 30 as shown in Figs. 3 and 4. As can be seen, the neck portion 19 used for holding the preform 4 in place during blow molding in the mold 30 now serves as the neck portion 19 to which a neck closure can be mounted.

As is shown in Fig. 8, the spout closure is attached to the bulge portion 10 by means of an adhesive 14, which adheres very well to PET and similar materials, so a spout closure 8 is reliably fixed in spite of the absence of an anchoring protrusion or recess at the bulge portion 10. Thus, a spout of useful size can be provided and equipped with a spout closure in spite of the limited deformability of the PET material that makes blow molding into a shape with an anchoring protrusion or recess impracticable.

As shown in Fig. 7, an alternative example of a spout closure 8 has been fixed to the bulge portion 10 of the container body 2. According to this example, the spout closure 8 is a push-pull reclosable cap, having a fitting 9 and a closing element 11 that is displaceable back and forth along stub 15 of the fitting 9 between a closed position (shown) closing off passages in a distal end of the stub 15 and an open position leaving the passages in the distal end of the stub free to allow a fluid to pass through.

The disclosure 8 of the spout 6 and the cap member 11 respectively are leak-tightly attached to the bulge portion 10 by a gap-filling adhesive 14, which is hot-melt glue in this special embodiment. As can be seen, the gap-filling adhesive 14 enables the leak-tightly connection between the bulge portion 10 and the cap member 11 by spanning the gap g between said exposed elements.

The spout closure 8 is leak-tightly attached to the container body 2 at the bulge portion 10 by a ring 14 of a hot-melt adhesive so that the fitting 9 of the spout closure 8 is not detachable anymore. The adhesive 14 bonds very well to the PET material of the bulge portion 10 and provided stability thereto, so that it is stable enough in spite of being of a generally uniform thickness without integral reinforcements. The cap member 11 and the stub 15 constitute a valve which can be closed and opened so that open communication between the inner space 3 of the container 1 and the environment 5 can be established and cut repeatedly.
- 1.: Container
- 2.: Container body
- 3.: Inner space
- 4.: Preform
- 5.: Outer space
- 6.: Spout
- 7.: Fluid product
- 8.: Closure
- 9.: Fitting
- 10.: Bulge portion
- 11.: Cap member
- 12.: Dispenser passage
- 13.: Threaded portion
- 14.: Adhesive
- 15.: Stub
- 16.: Neck
- 17.: Passage
- 18.: Neck closure
- 19.: Neck portion
- 20.: Flaps
- 22.: Neck passage
- 30.: Mold
- 32.: Mold cavity
- 34.: Bulge portion cavity
- 36.: Internal cavity surface
- A: Axis of spout
- d: Wall thickness

## Claims

1. A blow molded container of a polymer for storing fluid products, the container comprising a neck and a spout (6) comprising a bulge portion (10) integral with a container body (2) having expanded wall material and provided with a spout passage (12) and a closure (8) for closing off the passage, **characterized in that** said container is of a Polyethylenterephthalat (PET), at least a substantial portion of the expanded wall material of the container body (2) is strain hardened, said neck is injection molded and said closure (8) is attached to said bulge portion (10) by an adhesive (14) constituting a ring surrounding the spout passage (12) between the bulge portion (10) and the closure (8).

2. A container according to claim 1, wherein a neck passage is bounded by and extends through said injection molded neck, the container further comprising a neck closure (18) for closing off said neck passage.

3. A container according to one of the preceding claims, wherein the spout closure (8) comprises a fitting (9) attached to the bulge portion (10) by the adhesive and a cap member (11) releasably attached to the fitting (9).

4. A container according to claim 3, wherein the fitting (9) comprises a threaded portion (13) for engaging a threaded portion of the cap member (11).

5. A container according to one of the preceding claims, wherein the spout closure (8) comprises a valve (15).

6. A container according to claim 5, wherein the cap member (11) comprises the valve (15).

7. A container according to one of the preceding claims, wherein the bulge portion (10) has a substantially constant wall thickness (d).

8. A container according to any of the preceding claims, wherein the bulge portion (10) has a central axis (A) and an outer shape that is continuously free of projections projecting orthogonally to the central axis (A).

9. A container according to any of the preceding claims, wherein the bulge portion (10) projects from an adjacent container wall portion to a distal end in a direction of a central axis (A) and has an outer cross-sectional shape that is continuously tapered from the adjacent container wall portion to the distal end to a smallest outer contour at the distal end.

10. A container according to any of the preceding claims, wherein the adhesive is a gap-filling adhesive (14).

11. A container according to any of the preceding claims, wherein the adhesive is a hot-melt glue.

12. A method of manufacturing a container (1) for storing fluid products polymer resin and comprising an injection molded neck, including the step of blow molding;
**characterized in that** an injection moulded preform (4) of a Polyethylenterephthalat (PET) is blow molded within a mold (30) bounding a mold cavity (32) comprising a neck engaging portion, a container body (2) forming portion contiguous with the neck engaging portion and a bulge portion (34), wherein, during the blow molding the preform is expanded against the body forming portion of the mold and a bulge portion (10) integral with the container body (2) is formed in the bulge portion (34), at least a substantial portion of expanded wall material of the container body (2) being strain hardened;
the method further comprising the steps of:
• cutting a spout dispenser passage (12) in a distal end of the bulge portion (10); and
• adhesively attaching the spout closure member (8) to the bulge portion (10) with an adhesive (14) forming a ring surrounding the spout passage (12) between the bulge portion (10) and the closure (8).

13. A method according to claim 12, wherein the adhesive is a hot-melt glue.

14. A method according to claim 12 or 13, wherein spout dispenser passage (12) is cut by piercing cuts forming a star shape in a distal end of the bulge portion (10) and bending over flaps of wall material between the cuts.

15. A method according to claim 12 or 13, wherein spout dispenser passage (12) is formed by piercing a hot cutter into a distal end of the bulge portion (10), causing wall material in contact with the cutter to melt or retract from an area where the passage (12) is formed.

## Patentansprüche

1. Blasgeformter Behälter aus einem Polymer zum Speichern flüssiger Produkte, der Behälter umfassend einen Hals und einen Ausgießer (6) umfassend einen Wölbungsteil (10), integral mit einem Behälterkörper (2) mit expandiertem Wandmaterial und versehen mit einem Ausgießerdurchgang (12) und einem Verschluss (8) zum Verschließen des Durchgangs, **dadurch gekennzeichnet, dass** der Behälter aus einem Polyethylentherephthalat (PET) ist, mindestens ein wesentlicher Teil des expandierten Wandmaterials des Behälterkörpers (2) kaltgehärtet ist, welcher Hals spritzgegossen ist und welcher Verschluss (8) mittels eines Klebstoffs (14), der einen Ring bildet, der den Ausgießerdurchgang (12) zwischen dem Wölbungsteil (10) und dem Verschluss (8) umgibt, an dem Wölbungsteil befestigt ist.

2. Behälter nach Anspruch 1, wobei ein Halsdurchgang von dem spritzgegossenen Hals begrenzt ist und durch diesen verläuft, welcher Behälter ferner einen Halsverschluss (18) zum Verschließen des Halsdurchgangs umfasst.

3. Behälter nach einem der vorhergehenden Ansprüche, wobei der Ausgießerverschluss (8) ein Formstück (9), das mittels des Klebstoffs an dem Wölbungsteil (10) befestigt ist, und ein Kappenelement (11), das lösbar an dem Formstück (9) befestigt ist, umfasst.

4. Behälter nach Anspruch 3, wobei das Formstück (9) einen Gewindeteil (13) umfasst, um in einen Gewindeteil des Kappenelements (11) einzugreifen.

5. Behälter nach einem der vorhergehenden Ansprüche, wobei der Ausgießerverschluss (8) ein Ventil (15) umfasst.

6. Behälter nach Anspruch 5, wobei das Kappenelement (11) das Ventil (15) umfasst.

7. Behälter nach einem der vorhergehenden Ansprüche, wobei der Wölbungsteil (10) eine im Wesentliche konstante Wanddicke (d) hat.

8. Behälter nach einem der vorhergehenden Abschnitte, wobei der Wölbungsteil (10) eine Mittelachse (A) und eine Außenform, die ständig frei von Vorsprüngen, die orthogonal zu der Mittelachse (A) hervorstehen, ist, hat.

9. Behälter nach einem der vorhergehenden Ansprüche, wobei der Wölbungsteil (10) von einem benachbarten Behälterwandteil zu einem distalen Ende in eine Richtung einer Mittelachse (A) hervorsteht und eine äußere Querschnittform hat, die sich ununterbrochen von dem benachbarten Behälterwandteil zu dem distalen Ende zu einer kleinsten Außenkontur an dem distalen Ende verjüngt.

10. Behälter nach einem der vorhergehenden Ansprüche, wobei der Klebstoff ein lückenfüllender Klebstoff (14) ist.

11. Behälter nach einem der vorhergehenden Ansprüche, wobei der Klebstoff ein Heißschmelzkleber ist.

12. Verfahren zur Herstellung eines Behälters (1) zum Speichern flüssiger Produkte aus Polymerharz und umfassend einen spritzgegossenen Hals, einschließlich des Blasformschritts;
**dadurch gekennzeichnet, dass** eine spritzgegossene Vorform (4) eines Polyethylenterephthalats (PET) blasgeformt wird in einer Form (30), die einen Formhohlraum (32) begrenzt, umfassend einen Halseingriffteil, ein Formteil für den Behälterkörper (2), zusammenhängend mit dem Halseingriffteil und einem Wölbungsteil (34), wobei die Vorform während des Blasformens gegen den Körperformteil der Form expandiert wird und ein Wölbungsteil (10), integral mit dem Behälterteil (2), in dem Wölbungsteil (34) geformt wird, wobei mindestens ein wesentlicher Teil von expandiertem Wandmaterial des Behälterkörpers (2) kaltgehärtet ist;
das Verfahren ferner umfassend folgende Schritte:
• Schneiden eines Ausgießerdurchgangs (12) in ein distales Ende des Wölbungsteils (10); und
• Klebebefestigung des Ausgießerverschlusselements (8) an dem Wölbungsabschnitt (10) mit einem Klebstoff (14), um einen Ring zu bilden, der den Ausgießerdurchgang (12) zwischen dem Wölbungsabschnitt (10) und dem Verschluss (8) umgibt.

13. Verfahren nach Anspruch 12, wobei der Klebstoff ein Heißschmelzkleber ist.

14. Verfahren nach Anspruch 12 oder 13, wobei der Ausgießerdurchgang (12) geschnitten wird durch Stechschnitte, die eine Sternform in einem distalen Ende des Wölbungsabschnitts (10) und abknickende Klappe von Wandmaterial zwischen den Schnitten bilden.

15. Verfahren nach Anspruch 12 oder 13, wobei der Ausgießerdurchgang (12) geformt wird durch Einstechen eines Heißschneiders in ein distales Ende des Wölbungsabschnitts (10), sodass das Wandmaterial, das mit dem Schneider in Kontakt kommt, schmilzt oder sich aus einem Bereich, wo der Durchgang (12) geformt wird, zurückzieht.

## Revendications

1. Récipient en polymère moulé par soufflage destiné à contenir des produits fluides, le récipient comprenant un col et un bec verseur (6) comprenant une partie bombée (10) formée d'un seul tenant avec un corps de récipient (2) ayant un matériau de paroi expansé et pourvu d'un passage de bec verseur (12) et d'un bouchon (8) pour obturer le passage, **caractérisé en ce que** ledit récipient est en polyéthylène téréphtalate (PET), au moins une partie substantielle du matériau de paroi expansé du corps de récipient (2) est écrouie, ledit col est moulé par injection et ledit bouchon (8) est fixé à ladite partie bombée (10) par un adhésif (14) qui constitue une bague entourant le passage de bec verseur (12) entre la partie bombée (10) et le bouchon (8).

2. Récipient selon la revendication 1, dans lequel un passage de col est délimité par et s'étend à travers ledit col moulé par injection, le récipient comprenant en outre un bouchon de col (18) pour obturer ledit passage de col.

3. Récipient selon l'une des revendications précédentes, dans lequel le bouchon de bec verseur (8) comprend un raccord (9) fixé à la partie bombée (10) par l'adhésif et un élément formant capuchon (11) attaché de manière amovible au raccord (9).

4. Récipient selon la revendication 3, dans lequel le raccord (9) comprend une partie filetée (13) permettant la mise en prise d'une partie filetée de l'élément formant capuchon (11).

5. Récipient selon l'une des revendications précédentes, dans lequel le bouchon de bec verseur (8) comprend une soupape (15).

6. Récipient selon la revendication 5, dans lequel l'élément formant capuchon (11) comprend la soupape (15).

7. Récipient selon l'une des revendications précédentes, dans lequel la partie bombée (10) a une épaisseur de paroi (d) sensiblement constante.

8. Récipient selon l'une quelconque des revendications précédentes, dans lequel la partie bombée (10) a un axe central (A) et une forme extérieure qui est en continu exempte de protubérances faisant saillie orthogonalement à l'axe central (A).

9. Récipient selon l'une quelconque des revendications précédentes, dans lequel la partie bombée (10) fait saillie d'une partie de paroi de récipient adjacente à une extrémité distale dans une direction d'un axe central (A) et a une forme en coupe transversale extérieure qui est rétrécie en continu de la partie de paroi de récipient adjacente à l'extrémité distale jusqu'à un contour extérieur le plus petit à l'extrémité distale.

10. Récipient selon l'une quelconque des revendications précédentes, dans lequel l'adhésif est un adhésif à joint épais (14).

11. Récipient selon l'une quelconque des revendications précédentes, dans lequel l'adhésif est une colle thermofusible.

12. Procédé de fabrication d'un récipient (1) destiné à contenir des produits fluides en résine de polymère et comprenant un col moulé par injection, comprenant l'étape de moulage par soufflage ;
**caractérisé en ce qu'**une ébauche moulée par injection (4) en polyéthylène téréphtalate (PET) est moulée par soufflage dans un moule (30) qui délimite une cavité de moule (32) comprenant une partie de mise en prise de col, un corps de récipient (2) formant une partie contiguë à la partie de mise en prise de col et une partie bombée (34), dans lequel, pendant le moulage par soufflage, on fait dilater l'ébauche contre la partie formant corps du moule et une partie bombée (10) intégrée au corps de récipient (2) est formée dans la partie bombée (34), au moins une partie substantielle du matériau de paroi expansé du corps de récipient (2) étant écrouie ;
le procédé comprenant en outre les étapes suivantes :
• découper un passage de distribution de bec verseur (12) dans une extrémité distale de la partie bombée (10) ; et
• fixer de manière adhésive l'élément formant bouchon de bec verseur (8) sur la partie bombée (10) avec un adhésif (14) qui forme une bague entourant le passage de bec verseur (12) entre la partie bombée (10) et le bouchon (8).

13. Procédé selon la revendication 12, dans lequel l'adhésif est une colle thermofusible.

14. Procédé selon la revendication 12 ou 13, dans lequel le passage de distribution de bec verseur (12) est découpé en pratiquant des entailles qui forment une forme d'étoile dans une extrémité distale de la partie bombée (10) et en repliant des rabats de matériau de paroi entre les entailles.

15. Procédé selon la revendication 12 ou 13, dans lequel le passage de distribution de bec verseur (12) est formé en enfonçant un outil de coupe chaud dans une extrémité distale de la partie bombée (10), en provoquant la fusion du matériau de paroi en contact avec l'outil de coupe ou sa rétraction par rapport à une zone où le passage (12) est formé.
